Europäisches Patentamt

European Patent Office

Office européen des brevets

(11) Veröffentlichungsnummer: **0 320 499**
**A2**

(12) **EUROPÄISCHE PATENTANMELDUNG**

(21) Anmeldenummer: 89102389.7

(22) Anmeldetag: 19.06.86

(51) Int. Cl.⁴: **B 25 J 15/02**
**B 25 J 15/10**

(30) Priorität: 25.07.85 AT 2210/85

(43) Veröffentlichungstag der Anmeldung:
14.06.89 Patentblatt 89/24

(84) Benannte Vertragsstaaten: **DE FR GB IT SE**

(60) Veröffentlichungsnummer der früheren Anmeldung nach
Art. 61 EPÜ: **0 210 974**

(71) Anmelder: **SIMMERING-GRAZ-PAUKER
AKTIENGESELLSCHAFT
Brehmstrasse 16
A-1110 Wien (AT)**

(72) Erfinder: **Winter, Alfred
Heinrich-Collin-Strasse 36
A-1140 Wien (AT)**

**Schendl, Adolf, Dipl.-Ing.
Mautner-Markhof-Gasse 13
A-1110 Wien (AT)**

(74) Vertreter: **Köhler-Pavlik, Johann, Dipl.-Ing.
Margaretenplatz 5
A-1050 Wien (AT)**

(54) **Greiferkonstruktion für einen Industrieroboter.**

(57) Eine Greiferkonstruktion für einen Industrieroboter ist zur
exakten Erfassung einer Welle, Kurbelwelle od.dgl. vorgesehen,
wobei die Welle durch die Greifervorrichtung jeweils an drei
Punkten erfaßt wird. Hiezu sind zumindest zwei Greifarme (119)
vorgesehen, welche durch einen hydraulischen Zylinder (116)
steuerbar sind, der ein Druckstück (117) betätigt, welches sich
im offenen Zustand des Greifers jeweils oberhalb der Drehachse (118) der Greifarme (119) befindet und auf einem
Kurvenzug (122) am Greifarm gleitet, sodaß bei Betätigung des
Zylinders die Druckstücke nach außen bzw. nach innen
gedrückt und die Greifarme nach innen bzw. nach außen
verschwenkt werden. In Verlängerung der Holmachse ist eine
lotrecht verschiebbare Schiebereinrichtung (128 bis 131) zur
Fixierung der Welle in lotrechter Richtung vorgesehen.

Fig.1

EP 0 320 499 A2

## Beschreibung

### Greiferkonstruktion für einen Industrieroboter

Die Erfindung betrifft eine Greiferkonstruktion mit Dreipunkhalterung und hydraulischer Betätigung für einen Industrieroboter für Handhabungs- und/oder Fertigungs- und/oder Prüfaufgaben an einem Werkstück, Geräteteil od.dgl., wobei am unteren Ende eines Holmes od.dgl. zumindest ein Greifer mit zwei Greifarmen vorgesehen ist.

Durch die DD-PS 208 578 ist eine Greiferkonstruktion mit Dreipunkhalterung und hydraulischer Betätigung zur Erfassung einer Welle bekannt, wobei zwei Finger die Welle seitlich symmetrisch erfassen und ein dritter Finger von oben gegen die Welle gedrückt wird. Eine exakte Erfassung der Welle ist nur dann möglich, wenn sich die an der Welle angreifenden drei Kräfte in der Summe gegenseitig aufheben, d.h., wenn die vom dritten Finger ausgeübte Kraft genau auf der vertikalen Symmetrieachse der Welle liegt bzw. am obersten Punkt der Welle angreift. Da sich der dritte Finger jedoch auf einer Kreisbahn bewegt, deren Mittelpunkt z.B. rechts von der erwähnten Symmetrieachse liegt, so ist obige Bedingung nur für einen einzigen vorbestimmten Durchmesser der Welle erfüllt. Außerdem besteht der Nachteil, daß die Welle während des Greifvorgangs angehoben oder nach unten gedrückt wird, wenn sich die Greiferkonstruktion nicht in der richtigen Höhe zur Welle befindet.

Aufgabe der Erfindung ist die Schaffung einer Greiferkonstruktion, die eine exakte Erfassung einer Welle, Kurbelwelle od.dgl. ermöglicht, wobei die Welle durch die Greiferkonstruktion jeweils an drei Punkten fixiert und während des Greifvorganges weder angehoben noch nach unten gedrückt werden soll.

Diese Aufgabe wird erfindungsgemäß dadurch gelöst, daß ein hydraulischer Zylinder je ein Druckstück betätigt, welches sich im offenen Zustand des Greifers jeweils oberhalb der Drehachse der Greifarme befindet und auf einem Kurvenzug am Greifarm gleitet, sodaß bei Betätigung des hydraulischen · Zylinders die Druckstücke in waagrechter Richtung nach außen bzw. nach innen gedrückt und die Greifarme nach innen bzw. nach außen verschwenkt werden, und daß eine in Verlängerung der Holmachse angeordnete lotrecht verschiebbare Schiebereinrichtung zur Fixierung des Werkstückes in lotrechter Richtung vorgesehen ist.

Weitere Merkmale und Einzelheiten der Erfindung werden nachfolgend anhand eines bevorzugten Ausführungsbeispiels mit Hilfe der Zeichnungen beschrieben. Es zeigen

Fig. 1 eine Seitenansicht eines erfindungsgemäßen Greifers teilweise im Schnitt,

Fig. 2 die Rückansicht des Greifers nach Fig. 1,

Fig. 3 einen Schnitt nach den Linien III-III des Greifers nach Fig. 1 und

Fig. 4 einen Schnitt nach den Linien IV-IV des Greifers nach Fig. 1.

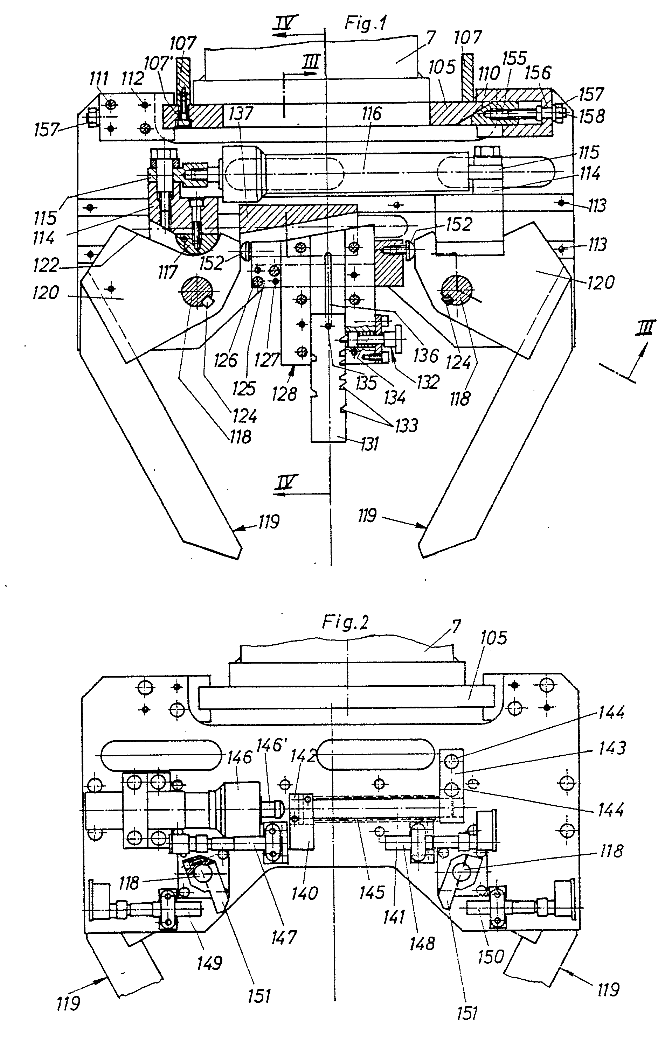

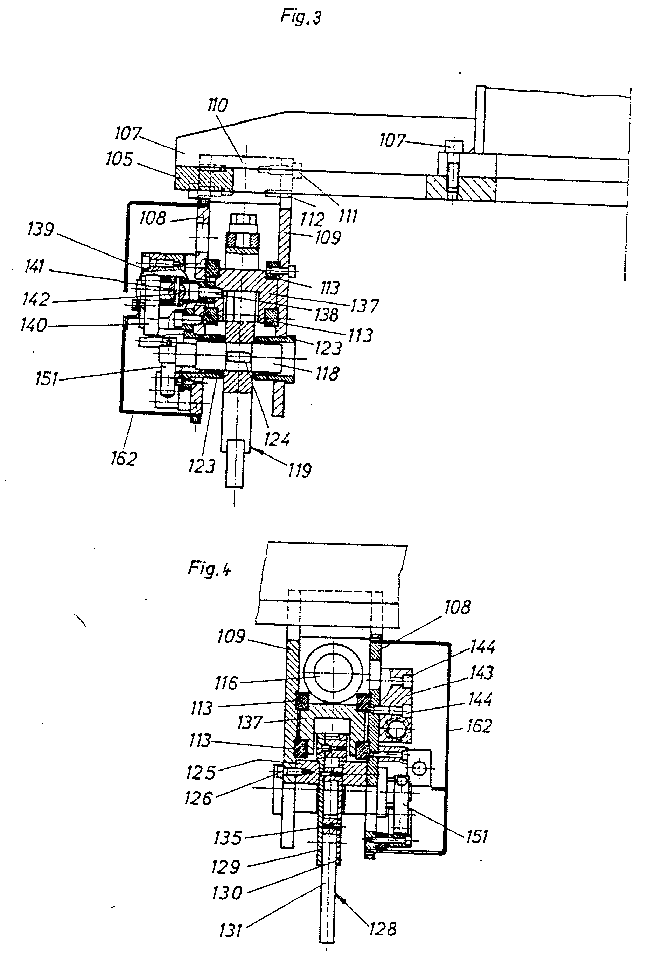

Die Fig. 1 bis 4 zeigen eine bevorzugte Ausführungsform einer Greifvorrichtung zum Erfassen von Wellen, Kurbelwellen od.dgl., welche am unteren Ende des Holmes 7 befestigbar ist. Zu diesem Zweck ist eine Tragplatte 105 am Holm 7 mittels mehrerer Schrauben 106 angeschraubt (Fig.3). Die Tragplatte 105 ist mit zwei Leisten 107 versteift, die mittels Schrauben 107' mit der Tragplatte 105 verbunden ist (Fig.1). Wie aus Fig. 3 ersichtlich ist, ist nur der linke Greifer der vorzugsweise aus zwei identischen Greifern bestehenden Greifvorrichtung dargestellt. Eine Vorderwand 108 und eine Rückwand 109 bilden zwei Tragelemente für die Einzelteile des Greifers. Die Vorder- und Rückwand 108, 109 sind an den oberen Ecken über je einen Verbindungsklotz 110 mittels Schrauben 111 und Stiften 112 miteinander verbunden. Etwa in halber Höhe der Vorder- bzw. Rückwand 108, 109 sind innenseitig je zwei im Abstand zueinander angeordnete, waagrecht verlaufende vierkantige Führungsleisten 113 an der Vorderwand 108 und an der Rückwand 109 angeschraubt, die als Führung für zwei Schieber 114 dienen, die jeweils über einen Verbindungteil 115 mit den Anschlußstücken an den Enden eines hydraulischen Zylinders 116 verbunden sind, der somit "schwimmend" gelagert ist. Am unteren Ende jedes Schiebers 114 ist ein halbkreisförmiges Druckstück 117 angeschraubt. Jedes Druckstück 117 befindet sich im offenen Zustand des Greifers oberhalb der Drehachse 118 jedes Greifarmes 119, der jeweils aus einem auf der Drehachse 118 starr befestigtenn Schwenkteil 120 und einem an letzteren angeschraubten Hebel 121 besteht. Der Schwenkteil 120 weist auf seiner oberen Seite einen zunächst halbkreisförmig und anschließend schräg nach oben verlaufenden Kurvenzug 122 auf, auf welchem das Druckstück 117 geleitet. Jede Drehachse 118 ist mittels Lagerbuchsen 123 in der Vorder- und Rückwand 108, 109 drehbar gelagert. Die starre Verbindung mit dem Schwenkteil 120 ist durch eine Paßfeder 124 gewährleistet. Bei Betätigung des hydraulischen Zylinders 116 werden somit die Druckstücke 117 in waagrechter Richtung nach außen bzw. nach innen gedrückt und die Schwenkteile 120 nach innen bzw. nach außen verschwenkt. Unterhalb der Führungsleiste 113 befindet sich mittig ein Distanzstück 125, welches mittels Schrauben 126 und Stiften 127 an der Vorder- und Rückwand 108, 109 befestigt ist und zur lotrechten Führung eines Keilschiebers 128 dient. Der Keilschieber 128 besteht aus zwei Platten 129,130, die in einer rechteckförmigen Ausnehmung des Distanzstückes 125 geführt sind und am oberen Ende eine Abstufung aufweisen, die am Rand der Ausnehmung des Distanzstückes 125 aufliegt. Ein Schieber 131 ist in mittigen Nuten der Platten 129,130 lotrecht verschiebbar angeordnet und mit einer Rasteinrichtung 132 versehen, die ein Fixieren des Schiebers 131 zwischen den Platten 129,130 ermöglicht. Zu diesem Zweck ist der Schieber 131 mit keilförmigen Vertiefungen 133 versehen, in welche ein federnd gelagertes Raststück 134 einrastet. Der Schieber 131 trägt am oberen Ende eine Schraube 135, die in einem lotrecht ausgerichteten Langloch 136 in der Platte 130 geführt ist, sodaß der Schieber 131 bei Freigabe der Rasteinrichtung 132 nicht nach unten fällt. Die oberen Enden der Platten 129, 130 sind abgeschrägt, wobei der Steigungswinkel der Abschrägung mit dem eines Keils 137 übereinstimmt, der zwischen den beiden Schiebern 114 ebenfalls auf den Führungsleisten 113 waagrecht verschiebbar angeordnet ist. Wie aus Fig. 2 und 3 hervorgeht, ist der Keil 137 über eine Schraube 138 mit einem Mitnehmer 139 verbunden, an welchem eine Platte 140 angeschraubt ist. Am Mitnehmer 139 ist auch ein Ende eines Bolzens 141 mittels eines Stifts 142 befestigt, dessen anderes Ende in einer Halterung 143 waagrecht verschiebbar gelagert ist, welche mittels Schrauben 144 an der Vorderwand 108 befestigt ist. Der Bolzen 141 trägt eine Druckfeder 145, die sich einerseits gegen die Halterung 143 und anderseits gegen den Mitnehmer 139 abstützt, sodaß der Keil 137 in der Darstellung nach Fig. 2 nach links bzw. in der Darstellung nach Fig. 1 nach rechts gedrückt wird. In Verlängerung der Längsachse des Bolzens 141 ist ein hydraulischer Zylinder 146 außenseitig an der Vorderwand 108 befestigt, dessen Stößel 147 am Ende des Bolzens 141 beim Mitnehmer 139 angreift, sodaß bei Betätigung des hydraulischen Zylinders 146 der Keil in der Darstellung nach Fig. 2 nach rechts bzw. in der Darstellung nach Fig. 1 nach links, zur Kraft der Druckfeder 145 entgegengerichtet, gedrückt wird.

In der Höhe der Platte 140 sind außenseitig an der Vorderwand 108 zwei induktive Annäherungsschalter 147,148 angebracht, wobei der Schalter 147 auf die Endstellung der Platte 140 bei entspannter Druckfeder 145 und der Schalter 148 auf die Endstellung der Platte 140 bei gespannter Druckfeder 145 anspricht. In ähnlicher Weise wird die Schwenkstellung der Greifarme 119 mittels zwei induktiven Annäherungsschaltern 149, 150 überwacht, die ebenfalls außenseitig an der Vorderwand 108 befestigt sind und je auf die Stellung einer Klemmplatte 151 ansprechen, welche auf den Drehachsen 118 befestigt sind. Sind die Greifarme 119 ganz geöffnet, so liegen die Klemmplatten 151 an den Schaltern 149, 150 an, wobei die Offenstellung der Greifarme 119 mechanisch durch zwei Druckstücke 152 begrenzt wird, die am Distanzstück 125 angeschraubt sind und als Anschlag für die Schwenkteile 120 dienen.

Die beiden Greifer sind auf der Tragplatte 105 in waagrechter Richtung verschiebbar und fixierbar, damit die Greifvorrichtung an die Länge der Werkstücke anpaßbar ist. Die Verbindungsklötze 110 weisen hiezu eine zur Tragplatte 105 hin ausgerichtete Ausnehmung auf, in der eine Zentrierung 153 verschiebbar angeordnet ist. Die Zentrierung 153 ist am Ende abgeschrägt und untergreift das ebenfalls abgeschrägte Ende der Tragplatte 105. Am anderen Ende weist die Zentrierung 153 ein Sackloch 154 mit Innengewinde auf, in welches eine Gewindespindel 155 eingreift, die über eine Bohrung 156 aus dem Klotz 110 herausgeführt ist und am Ende eine Mutter 157 trägt. Die Mutter 157 ist mit einem Stift 158 auf der Gewindespindel 155 fixiert und stützt sich über eine Scheibe 159 außen am Klotz 110 ab. Auf der Innenseite des Klotzes 110 ist die Gewindespindel 155 durch einen Bund 160 verstärkt, der sich über eine Tellerfeder 161 am Klotz 110 innenseitig abstützt. Die Schrägflächen der Zentrierung 153 und der Tragplatte 105 sind mit einer feinen Verzahnung versehen, damit eine Sicherheit gegen eine Verschiebung des Greifers relativ zur Tragplatte 105 gewährleistet ist und eine Einstellung des Abstandes der beiden Greifer in kleinen Schritten erfolgen kann. Die an der Außenseite der Vorderwand 108 liegenden Teile sind durch eine Abdeckung 162 geschützt.

Anschließend wird die Funktionsweise der Greifvorrichtung erläutert. Zuerst wird über die induktiven Annäherungsschalter 149 und 150 kontrolliert, ob die Greifarme 119 geöffnet sind. Gleichzeitig wird mit dem induktiven Annäherungsschalter 148 überprüft, ob sich der Keil 137 in der nach Fig. 1 gezeigten Lage befindet. Sind beide Bedingungen eingehalten, so wird die Greifvorrichtung so weit abgesenkt, bis der Keilschieber 128 nach Berühren des Werkstükkes durch den Schieber 131 etwas angehoben wird, worauf der hydraulische Zylinder 146 freigegeben wird und die Druckfeder 145 den Keil 137 über den Mitnehmer 139 so weit nach rechts verschiebt (Fig.1), bis die schräge Fläche des Keils 137 satt auf der schrägen Fläche des angehobenen Keilschiebers 128 bzw. der Platten 129, 130 aufliegt, wodurch das Werkstück in lotrechter Richtung fixiert ist. Anschließend wird der hydraulische Zylinder 116 betätigt und die Greifarme 119 in Schließstellung gebracht, bis ein erhöhter Druck in der Zuleitung um Zylinder 116 anzeigt, daß die Greifarme 119 das Werkstück berühren, worauf der Greifvorgang beendet ist. Bewegt sich der Keil 137 während des Greifvorganges ganz nach rechts, so gibt der induktive Annäherungsschalter 147 das Signal, daß kein Werkstück vorhanden ist, da der Keilschieber 128 nicht angehoben wurde, worauf der Greifvorgang unterbrochen wird. Wenn Druckstücke 117 der Schieber 114 am Ende des Greifvorgangs auf dem schräg verlaufenden Kurvenzug 112 der Schwenkteile 120 zu stehen kommen, ist eine selbsthemmende Wirkung gegeben, wodurch das Werkstück auch bei Ausfall der Hydraulikanlage sicher gehalten wird.

**Patentansprüche**

1. Greiferkonstruktion mit Dreipunkthalterung und hydraulischer Betätigung, für einen Industrieroboter für Handhabungs-und/oder Fertigungs-und/oder Prüfaufgaben an einem Werkstück, Geräteteil od.dgl., wobei am unteren Ende eines Holms od.dgl. zumindest ein Greifer mit zwei Greifarmen vorgesehen ist, dadurch gekennzeichnet, daß ein hydraulischer Zylinder (116) je ein Druckstück(117) betätigt, welches sich im offenen Zustand des Greifers jeweils oberhalb der Drehachse (118) der Greifarme (119) befindet und auf einem Kurvenzug (122) am Greifarm gleitet, sodaß bei Betätigung des hydraulischen Zylinders (116) die Druckstücke (117) in waagrechter Richtung nach außen bzw. nach innen gedrückt und die Greifarme (119) nach innen bzw. nach außen verschwenkt werden, und daß eine in Verlängerung der Holmachse angeordnete lotrecht verschiebbare Schiebereinrichtung (128 bis 131) zur Fixierung des Werkstückes in lotrechter Richtung vorgesehen ist.

2. Greiferkonstruktion nach Anspruch 1, dadurch gekennzeichnet, daß je zwei innenseitige und im Abstand zueinander angeordnete waagrecht verlaufende Führungsleisten (113) an der Vorder- und Rückwand (108,109) angeordnet sind, die als Führung für zwei an den Anschlußstücken der Enden des hydraulischen Zylinders (116) befestigter Schieber (114) dienen, an deren unterem Ende jeweils das Druckstück (117) befestigt ist, daß unterhalb der Führungsleisten (113) ein Distanzstück (125) mittig angeordnet ist, welches eine rechteckförmige Ausnehmung zur lotrechten Führung eines Keilschiebers (128) aufweist, welcher aus zwei Platten (129,130) besteht, die am oberen Ende eine Abstufung aufweisen, welche am Rand der Ausnehmung aufliegt, wobei ein Schieber (131) in mittigen Nuten der Platten (129,130) lotrecht verschiebbar angeordnet und mit einer Rasteinrichtung (132) versehen ist, die ein Fixieren des Schiebers (131) zwischen den Platten (129,130) ermöglicht, und wobei die Platten (129,130) am oberen Ende abgeschrägt sind, und die Abschrägung einen Steigungswinkel aufweist, der mit dem eines Keils (137) übereinstimmt, welcher zwischen den beiden Schiebern (114) ebenfalls auf den Führungsleisten (113) waagrecht verschiebbar angeordnet ist, einen mit dem Keil (137) über einen Mitnehmer (139) verbundenen, waagrecht verschiebbar gelagerten Bolzen (141), welcher eine Druckfeder (145) trägt, die sich einerseits gegen eine Halterung (134) für den Bolzen (141) und anderseits gegen den Mitnehmer (139) abstützt, und einem in Verlängerung der Längsachse des Bolzens (141) angeordneten hydraulischen Zylinder (146), dessen Stößel (147) am Ende des Bolzens (141) beim Mitnehmer (139) angreift.

3. Greiferkonstruktion nach Anspruch 2, dadurch gekennzeichnet, daß die Rasteinrichtung (132) aus einem federnd gelagerten Raststück (134) besteht, welches in keilförmigen Vertiefungen (133) des Schiebers (131) einrastet.

4. Greiferkonstruktion nach Anspruch 2, dadurch gekennzeichnet, daß der Mitnehmer (139) eine Platte (140) trägt, deren Endstellungen bei einer Verschiebung des Keils (137) durch zwei induktive Annäherungsschalter (147,148) feststellbar sind.

5. Greiferkonstruktion nach Anspruch 1, dadurch gekennzeichnet, daß auf den Drehachsen (118) der Greifarme (119) Klemmplatten (151) befestigt sind, deren Schwenkstellung durch induktive Annäherungsschalter (149,150) feststellbar ist.

6. Greiferkonstruktion nach Anspruch 2, dadurch gekennzeichnet, daß der Kurvenzug (122) am Greifarm (119) zunächst halbkreisförmig und anschließend schräg nach oben verläuft.

Fig.1

Fig.2

Fig. 3

Fig. 4